# EUROPEAN PATENT APPLICATION

(11) **EP 3 364 391 A1**
(43) Date of publication of application: **22.08.2018**
(21) Application number: 16855766.8
(22) Date of filing: 14.10.2016
(51) Int. Cl.: G08G 1/0965, G08B 5/36, G08B 25/10, G08B 3/10, G08B 21/18, G08B 25/12, H05B 37/02, G08B 25/14, F21W 111/02

(54) **EMERGENCY SITUATION HANDLING PLATFORM FOR ROAD USING EMERGENCY SITUATION DISPLAY DEVICE ATTACHED TO STREET LIGHT**

(30) Priority: 16.10.2015 KR 20150144980; 06.11.2015 KR 20150156148; 05.04.2016 KR 20160041719
(71) Applicant: KMW Inc., Hwaseong-si, Gyeonggi-do 18462 (KR); Bluekite Inc., Seoul 04107 (KR); Sogang University Research Foundation, Seoul 04107 (KR)
(72) Inventor: KIM, Duk-Yong, Yongin-si Gyeonggi-do 17086 (KR); JEONG, Ok-Hyun, Seongnam-si Gyeonggi-do 13588 (KR); JANG, Heung-Soon, Jeungpyeong-gun Chungcheongbuk-do 27927 (KR)
(74) Representative: RatnerPrestia
(86) International application number: PCT/KR2016/011539
(87) International publication number: WO 2017/065549

(57) **Abstract**

In at least some embodiments of the present disclosure, an emergency situation notification device installed in a vehicle transmits a message for notifying an occurrence of an emergency situation of the vehicle when the emergency situation occurs, and an emergency situation display device installed in a street light performs a turning-on operation or a blinking operation according to reception of the message for notifying the occurrence of the emergency situation. Further, when a message notifying that an emergency vehicle is currently being dispatched is received from an emergency situation notification device which may be installed in the emergency vehicle, etc., a control center server controls emergency situation display devices, which are installed in street lights in the proceeding direction of the vehicle currently being dispatched, to properly generate warning signs.

## Description

### [Technical Field]

The present disclosure relates to an emergency situation handling platform (base system) for a road using an emergency situation display device attached to a street light for handing an emergency situation, such as notifying an occurrence of an emergency situation on a road and notifying that an emergency vehicle is traveling.

### [Background Art]

In recent years, as the industry develops and a demand for vehicles increases, the number of people using vehicles gradually increases. As a result, a driver of a vehicle frequently experiences emergency situations such as accidents between vehicles and a rollover, a fall, and a fire of a vehicle while the driver is traveling the vehicle.

As such, when the emergency situation occurs on the road, if drivers of succeeding vehicles drive their vehicles without recognizing an accident occurring ahead, it is highly likely to cause a secondary accident that the succeeding vehicles collide with the accident vehicle.

In particular, since visibility is so bad at a foggy day, at nighttime, on a curved road, or the like, and thus it is difficult to figure out accident situations, the possibility of causing a secondary accident becomes even higher.

A delayed or congested section may suddenly occur in a specific section. Therefore, when a vehicle which is traveling in a smooth traffic section suddenly comes across the delayed or congested section, a driver cannot slow down a vehicle speed, and thus the driver's vehicle may collide with a forward traveling vehicle.

On the other hand, in order for a vehicle (hereinafter referred to as an "emergency vehicle") requiring an emergency dispatch such as an ambulance, a fire truck, and a police car to quickly arrive at an accident spot upon an occurrence of an accident, a progress situation of the emergency vehicle is notified to nearby vehicles by operations of blinking a warning light installed in the emergency vehicle, blowing a siren, or the like, thereby inducing a yield so that the general nearby vehicles do not interfere with a traveling route of the emergency vehicle.

By the way, the blinking of the warning light, the blowing of the siren of the emergency vehicle, and the like may be recognized only by drivers of general nearby vehicles or may not quickly (or clearly) recognized, such that the situation in which the corresponding general vehicles do not get out of the traveling route of the emergency vehicle may often occur.

### [Disclosure]

### [Technical Problem]

An object of the present disclosure is to prevent a secondary accident by notifying nearby or succeeding vehicles at a desired distance and local residents of emergency situations such as a case in which caution driving is required due to an occurrence of an accident, a road construction or the like and a case in which an emergency evacuation is required due to a disaster or an air raid.

Another object of the present disclosure is to provide an emergency situation handling platform for a road using an emergency situation display device capable of quickly taking rescue actions on the injured and quickly taking the injured to a hospital by allowing vehicles on a route on which emergency vehicles such as a police car, a fire truck, and an ambulance are scheduled to travel to more quickly and clearly recognize a situation in which the emergency vehicles are traveling so that the emergency vehicles can quickly arrive at an accident spot within a so-called golden time which means a life-saving time upon an occurrence of an accident.

### [Technical Solution]

According to an embodiment of the present disclosure, an emergency situation handling platform for a road includes: an emergency situation notification device which transmits an emergency situation alert signal for notifying an occurrence of an emergency situation when the emergency situation occurs and vehicle information or notifies the emergency situation alert signal received from the outside; an emergency situation display device which is turned-on or blinked to correspond to a type of emergency situations if the emergency situation alert signal and the vehicle information are received, transmits the received emergency alert signal and vehicle information to the control center server, transmits the emergency situation alert signal to other emergency situation display devices by a preset figure, and transmits the signal to other nearby emergency situation notification devices; and a control center server which controls the emergency situation display device to correspond to the type of emergency situations if the emergency situation alert signal and the vehicle information are received from the emergency situation display device through a communication network and shares necessary information with other institution centers.

### [Advantageous Effects]

As described above, it is possible to quickly notify the nearby vehicles of the accident alert signal when the accident occurs, by applying the technology for the emergency situation handling platform for a road using the emergency situation display device according to the embodiments of the present disclosure, thereby preventing the secondary accident from occurring. In addition, the emergency situation alert signals such as the emergency evacuation signal can be notified to nearby vehicles when the caution driving is required due to the road construction or the like and the emergency evacuation is required due to the disaster, the air raid or the like in addition to the caution alert signal, thereby preventing the accident from occurring. In addition, the vehicles on the route on which the emergency vehicles such as a police car, a fire truck, and an ambulance are scheduled to travel can more quickly and clearly recognize the situation in which the emergency vehicles are running to allow the emergency vehicles to quickly arrive at the accident spot, thereby taking rescue actions on the injured and quickly taking the injured to the hospital.

In addition, in at least some embodiments of the present disclosure, the emergency situation display device is installed on the pole of the street light. In this way, the street light can be used as the medium of the communication means to build the network with the relatively lower cost while increasing the utility of the conventionally installed street light as compared with the conventional vehicle-to-vehicle communication scheme and the like.

### [BRIEF DESCRIPTION OF THE DRAWINGS]

FIG. 1 is a configuration diagram of an emergency situation handling platform for a road using an emergency situation display device attached to a street light according to a first embodiment of the present disclosure.
FIG. 2 is a block configuration diagram of a first emergency situation notification device in FIG. 1.
FIG. 3 is a block configuration diagram of a second emergency situation notification device in FIG. 1.
FIG. 4 is a block configuration diagram of the emergency situation display device in FIG. 1.
FIG. 5 is a configuration diagram of an emergency situation handling platform for a road using an emergency situation display device attached to a street light according to a second embodiment of the present disclosure.
FIG. 6 is a block configuration diagram of a first emergency situation notification device in FIG. 5.
FIG. 7 is a block configuration diagram of a mobile communication terminal in FIG. 5.
FIG. 8 is a diagram illustrating an example of an operation screen of the mobile communication terminal in FIG. 7.
FIG. 9 is a configuration diagram of an emergency situation handling platform for a road using an emergency situation display device attached to a street light according to a third embodiment of the present disclosure.
FIG. 10 is a block configuration diagram of the emergency situation display device in FIG. 9.
FIG. 11 is a perspective view of a first example of the emergency situation display device applicable to the emergency situation handling platform for a road of the present disclosure.
FIG. 12 is an exploded perspective view of FIG. 11.
FIG. 13 is a partial cross-sectional view taken along the line A-A' of FIG. 11.
FIG. 14 is a block configuration diagram of a second example of the emergency situation display device applicable to the emergency situation handling platform for a road of the present disclosure.
FIG. 15 is a perspective view of the emergency situation notification device of FIG. 14.
FIG. 16 is a block configuration diagram of a third example of the emergency situation display device applicable to the emergency situation handling platform for a road of the present disclosure.

### [Best Mode]

Hereinafter, various embodiments of the present disclosure will be described in detail with reference to the accompanying drawings. Specific matters such as specific components will be described below, which are provided only for a better understanding of the present disclosure. Accordingly, it will be apparent to those skilled in the art that the specific matters can be variously modified and changed without departing from the spirit or scope of the present disclosure.

### [Configuration of First Embodiment]

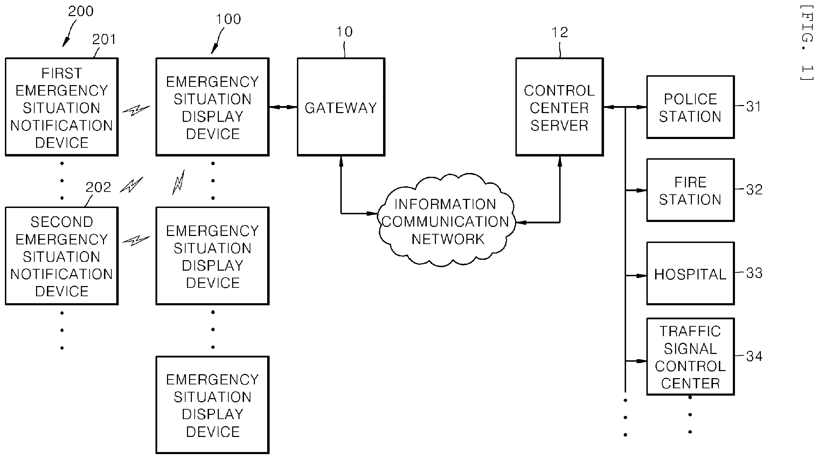

FIG. 1 is a configuration diagram of an emergency situation handling platform for a road using an emergency situation display device attached to a street light according to a first embodiment of the present disclosure. As illustrated in FIG. 1, the emergency situation handling platform for a road is, for example, a user side apparatus for each user that may be installed in each of a plurality of user's vehicles, and may be configured to basically include: an emergency situation notification device 200 which generates a radio signal for notifying an occurrence of an emergency situation when the emergency situation occurs; for example, an emergency situation display device 100 which is an infrastructure installed on a pole of a street light installed on a roadside, and receives the radio signal of the emergency situation notification device 200 and transmits the received radio signal to a control center server 12 and performs a turning-on operation or a blinking operation for notifying the emergency situation; and the control center server 12 which controls the emergency situation display device 100, and determines a reception position of the radio signal transmitted from the emergency situation display device 100 and transmits for example, the information on the reception position to other institutions.

The emergency situation notification device 200 (hereinafter, abbreviated as 'notification device') may be configured to be divided into two types such as a first emergency situation notification device 201 (hereinafter, abbreviated as 'first notification device') and a second emergency situation notification device 202 (hereinafter, abbreviated as second notification device'). Both of the first and second notification devices 201 and 202 serves to detect an occurrence of an emergency situation during driving and transmit vehicle information and registrant information including an emergency situation alert signal corresponding to an accident notification or notify the emergency situation alert signal received from the outside. At this time, the first notification device 201 further includes emergency buttons for directly receiving an operation of an emergency situation from a user, and if the corresponding emergency button is turned-on, additionally performs a function of transmitting the emergency situation alert signal corresponding to a type of emergency buttons. As described above, the first notification device 201 including the emergency button may be provided only to a user who is separately associated with the applied emergency vehicle in advance.

The emergency situation display device 100 (hereinafter, abbreviated as 'display device') is turned-on or blinked corresponding to the type of emergency situations if the emergency situation alert signal and the vehicle information are received, and may serve to transmit the received emergency situation alert signal and vehicle information to the control center server 12 and transmit the emergency situation alert signal to other emergency situation display devices within a preset figure and transmit the emergency situation alert signal to other nearby emergency situation notification devices.

The control center server 12 controls the emergency situation display device 100 to correspond to the type of emergency situations if the emergency situation alert signal is received and serves to share information required for other institution centers such as a police station, a fire station, a hospital, and a traffic signal control center 31, 32, 33, and 34.

As described above, the control center server 12 may be configured to be connected to a gateway 10 through an information communication network such as the Internet, and communicate with each display device 100 through the gateway 10.

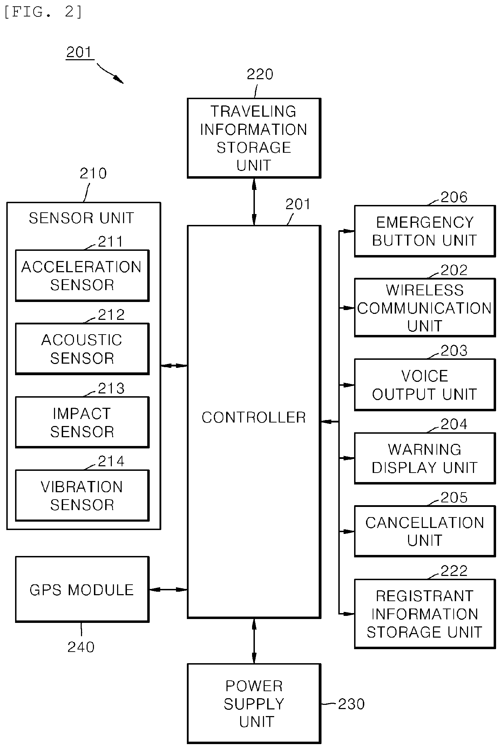

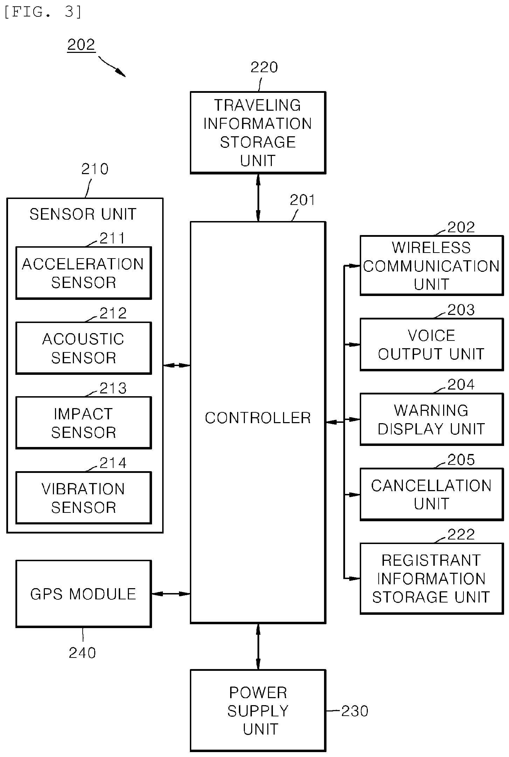

FIGS. 2 and 3 each are block configuration diagrams of the first emergency situation notification device 201 and the second emergency situation notification device 202 in FIG. 1. As illustrated in FIGS. 2 and 3, the first and second notification devices 201 and 202 include: a sensor unit 210 which is configured of at least one of a plurality of sensors such as an acceleration sensor 211, an acoustic sensor 212, an impact sensor 213, and a vibration sensor 214 and a combination thereof to detect an accident; a registrant information storage unit 222 which stores information on a notification device registrant, for example, a name, a blood type, an age, a gender, a chassis number, a vehicle number, and the like; a global positioning system (GPS) module 240 which notifies a position of a vehicle and traveling information of the vehicle; a traveling information storage unit 220 which stores information of the sensor unit 210 and the GPS module 240; a wireless communication unit 202 which transmits / receives a signal to / from the display device 100 according to a control signal; a voice output unit 203 which includes a speaker or the like to notify contents corresponding to an emergency situation alert signal received from the outside by a voice; a warning display unit 204 which is configured of an LED or other indicator to display contents corresponding to the emergency situation alert signal received from the outside; a cancellation unit 205 which includes a cancellation button for receiving an operation for releasing an output of the voice output unit 203 and / or the warning display unit 204 from a user; a controller 201 which controls each unit to transmit the emergency situation alert signal corresponding to an occurrence of an accident if the occurrence of the accident is detected by receiving a detection value from the sensor unit 210 and the information of the registrant information storage unit 222 and the traveling information storage unit 220 through the wireless communication unit 202, notify the emergency situation alert signal through the voice output unit 203 and the warning display unit 204 if the emergency situation alert signal is received through the wireless communication unit 202, or the like; and a power supply unit 230 which supplies power to each unit.

In the above description, the registrant information stored in the registrant information storage unit 222 may be registered in advance in each place of business through a separate information input device or the like when the corresponding notification device is provided to the user. In addition, the power supply unit 230 may have a structure in which a removable battery, a rechargeable battery or the like is used as a main operating power supply. In addition, the power supply unit 230 may have a structure in which it is connected to a cigar jack or a USB jack of a vehicle to receive operating power.

Meanwhile, as illustrated in FIGS. 2 and 3, the first notification device 201 includes all of the components of the second notification device 202, and further includes an emergency button unit 206. The emergency button unit 206 may be configured to include, for example, an accident notification button (not illustrated) which notifies an occurrence of an accident when the accident occurs, a caution notification button (not illustrated) which notifies the case in which a driver needs to pay attention to driving such as during construction and pavement skid, an emergency vehicle traveling notification button (not illustrated) which notifies that the emergency vehicle is traveling, an emergency evacuation notification button (not illustrated) which notifies a disaster or an air raid, and the like.

The first notification device 201 may be installed in the emergency vehicle, and the second notification device 202 may be installed in general vehicles. Therefore, although the emergency situation alert signal may be various types according to the emergency situation, the second notification device 202 for the general vehicles may generate an accident alert signal only.

When in the emergency button unit 206 of the first notification device 201 which may be installed in the emergency vehicle, for example, the emergency vehicle traveling notification button is pressed, the position information and the traveling information of the corresponding emergency vehicle may be transmitted along with the emergency vehicle traveling alert signal. Therefore, the control center server 12 may accurately know the position of the corresponding emergency vehicle.

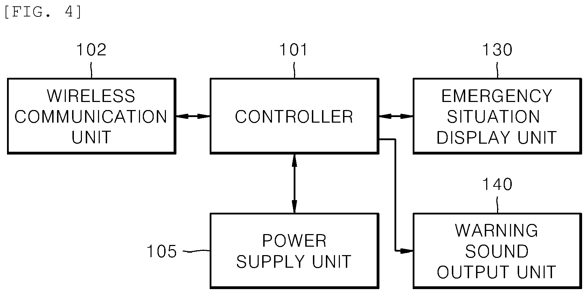

FIG. 4 is a block configuration diagram of the emergency situation display device 100 in FIG. 1. As illustrated in FIG. 4, the display device 100 includes a wireless communication unit 102 which transmits / receives a signal to / from the notification device 200 and other display devices; an emergency situation display unit (hereinafter, abbreviated as emergency light') 130 which is configured of an LED or the like to perform a display operation corresponding to an emergency situation; a controller 101 which controls, for example, the emergency situation alert signal, the informaiton of the registrant information storage unit, and the information of the traveling information storage unit received from the notification device 200 through the wireless communication unit 102 to be transmitted to the control center server 12 and the emergency situation display unit 130 to be turned-on or blinked according to the type of emergency situations; and a power supply unit 105 which supplies power to each unit.

In addition, the display device 100 may further include an warning sound output unit 140 which is configured of a speaker or the like to notify contents corresponding to an emergency situation by a warning sound (including voice), and the controller 101 may control a proper warning sound to be output through the warning sound output unit 140 according to the type of emergency situations.

In addition, the controller 101 may control the emergency situation alert signal to be transmitted to another emergency situation display device within a preset figure, the signal to be transmitted to other nearby emergency situation notification devices, the emergency situation display unit to be turned-on or blinked according to the type of emergency situations if the emergency situation alert signal is received from the control center server 12 through the wireless communication unit 102, the emergency situation alert signal received from the control center server 12 to be transmitted to another emergency situation display devices within the preset figure, and the signal to be transmitted to other nearby emergency situation notification devices 200.

The emergency situation display device 100 having the above-described configuration may be installed on a pole of a street light or a street light, or alone. At this time, the power supply unit 105 may be configured to receive power supplied from the corresponding installed street light. In addition, the power supply unit 105 may include a large-capacity rechargeable battery and thus may be configured to be operated independent of the street light even when the supply of power to the corresponding street light is cut off.

Hereinafter, the operation will be described.

The present embodiment describes the vehicle traveling on the road, but should be understood as a concept including a two-wheeled vehicle or other transportation means and as a concept including an emergency situation notification device carried by a user in addition to the transportation means.

### [Prevention of Secondary Accident]

In the event that a traffic accident such as a rear-end collision or a collision with another vehicle occurs or a traffic accident occurs alone during driving, the notification device 200 mounted on the vehicle detects that an accident occurs using various conditions. For example, the controller 201 of the notification device 200 may detect whether an accident occurs by detecting the acceleration of the vehicle through the acceleration sensor 211 and comparing the detected acceleration with a reference value. In addition, if a sound volume higher than the reference value corresponding to the accident sound volume is detected by the acoustic sensor 212, it maybe determined that an accident occurs. In addition, when the impact or vibration applied to the vehicle higher than the reference value is detected by the impact sensor 213 or the vibration sensor 214, it may be determined that an accident occurs.

Although the present embodiment describes the acceleration sensor, the acoustic sensor, the impact sensor, and the vibration sensor by way of example, the present disclosure may be implemented using other sensing means, such as a tilt sensing sensor and an air bag sensing sensor. In addition, the accident situation can be determined by any one of the sensors, but may be implemented by a combination of two or more sensors.

On the other hand, the global positioning system (GPS) is an advanced navigation system using an artificial satellite that can measure a position, a speed, and time on a standard coordinate system anywhere on the earth regardless of climate, and is now the most common navigation system. Therefore, the GPS module 240 can know the traveling information such as the position and direction of the vehicle. Further, in this case, as will be described later, when the GPS interlocks with the navigation device of the vehicle, the GPS may additionally obtain the traveling information from the navigation device.

If the detection value determined as the accident situation is input from the sensor unit 210, the controller 201 transmits the emergency situation alert signal to the outside through the wireless communication unit 202.

At this time, the detection information of each sensor when the accident is detected, that is, the traveling informaiton such as the acceleration information of the vehicle, the sound volume information, the impact information, the vibration information, the position information of the vehicle by the GPS module 240, and the chassis information, the vehicle number, the registrant name, the blood type, the age, the gender information and the like which are stored in the registrant information storage unit 222 are transmitted. Of course, in this case, the type of emergency situation alert signals generated from the second emergency situation notification device 202 may be a type of accident alert signals corresponding to the occurrence of the accident.

Meanwhile, the controller 101 of the emergency situation display device 100 controls the emergency situation alert signal, the vehicle status information, and the registrant information received through the wireless communication unit 102 to be transmitted to the control center server 12 through the gateway 10, the emergency situation display unit 130 to be turned-on or blinked according to the notification of the accident as preset, and the warning sound output unit 140 to perform the warning sound output operation.

The controller 101 transmits the accident alert signal to another emergency situation display device which may be positioned around an accident vehicle or at a rear side in a traveling direction of the accident vehicle and enables the emergency situation display unit positioned at the rear side to be turned-on or blinked according to the transmitted accident alert signal.

In this case, the accident alert signal is transmitted only to the emergency situation display device at the rear side within the preset figure. Here, the transmitted distance may be 1 km to 3 km. In addition, the transmittable distance is arbitrarily adjusted according to a traveling speed of a vehicle and a type of roads, so that the signal may be transmitted from 1 km to 5 km, for example.

A driver of a rear vehicle recognizing that the emergency situation display unit is turned-on or blinked as described above may recognize that an accident has occurred ahead.

As such, the emergency situation display devices 100 may be turned-on or blinked from a spot where a vehicle accident occurs to a rear of a preset distance, so that drivers of succeeding vehicles recognize that an accident occurs ahead, such that the driver carefully drives his / her vehicle, thereby preventing a secondary accident. Also, in this case, the emergency situation display devices 100 may make a blinking speed of an emergency situation indicating lamp near a spot where a vehicle accident or an emergency situation occurs relatively faster and the blinking speed of the emergency situation indicating lamp gradually slower as the emergency situation indicating lamp is farther away from the position of the vehicle. As a result, succeeding vehicles may determine a distance from a spot where an accident or an emergency situation occurs based on a blinking time interval of the emergency situation indicating lamp. Alternatively, the emergency situation display device 100 directly receiving the emergency situation alert signal from the emergency situation notification device 200 may be implemented differently from display devices which make the blinking speed fastest and signal colors different.

On the other hand, if the emergency situation alert signal is received, the emergency situation display device 100 transmits the received emergency situation alert signal to the near by area. Accordingly, the emergency situation notification device 200 installed in the succeeding vehicle receives the emergency situation alert signal from the emergency situation display device 100 and notifies a driver of the emergency situation alert signal. At this time, the voice output unit 203 notifies a driver that an accident has occurred ahead by a voice, and the warning display unit 204 is turned-on or blinked to notify a driver that an accident occurs ahead.

In this way, a driver of a succeeding vehicle are recognized that an accident occurs ahead within a short time not only by the emergency situation display device 100 but also by the emergency situation notification device 200 installed inside the succeeding vehicle, such that the driver carefully drives his / her vehicle, thereby preventing a secondary accident in advance.

Meanwhile, the emergency situation display device 100 transmits the received emergency situation alert signal, the vehicle status information, and the registrant information to the control center server 12. The control center server 12 may recognize an occurrence of an accident by receiving the emergency situation alert signal, the vehicle status information, the registrant information, and the like from the emergency situation display device 100, and may immediately share the required information with other institution centers such as a hospital, a fire station, and a police station depending on the situation. At this time, the operation control of the emergency situation display device 100 may be controlled even by the control center server 12.

As described above, according to the present disclosure, if the emergency situation such as an accident is recognized, necessary information such as an accident detection position and accident information may be immediately shared with the corresponding institution center, thereby enabling quick and efficient the accident handling and rescue operation.

### [Pre Alert Signal]

Hereinafter, the case where an emergency vehicle such as an ambulance starts to an accident site will be described by way of example. A driver who has received information on an accident may press the emergency vehicle traveling notification button of the emergency button unit 206 of the first emergency situation notification device 201 installed in the ambulance and then start his / her vehicle. If the emergency vehicle traveling notification button is pressed, the controller 201 of the corresponding first notification device 201 transmits the emergency vehicle traveling alert signal through the wireless communication unit 202. At this time, the position information and the traveling information of the emergency vehicle are transmitted together.

If the emergency vehicle traveling alert signal and the position information and the traveling information of the emergency vehicle are received through the wireless communication unit, the controller of the emergency situation display device around the ambulance transmits the received emergency vehicle traveling alert signal and position information and traveling information to the control center server through the gateway, and turns-on or blinks the emergency situation display unit corresponding to the emergency vehicle traveling alert signal as preset.

In addition, the emergency vehicle traveling alert signal is transmitted to the emergency situation display device positioned at the front side in the traveling direction of the ambulance, so that the front-side emergency situation display unit is turned-on or blinked correspondingly.

At this time, the emergency situation display device positioned at the front side is transmitted by a preset distance or a distance arbitrarily set according to the traveling speed of the vehicle, the traffic volume and the like. Here, the distance may be 1 km to 5 km.

That is, the emergency situation display devices 100 may turn-on or blink the emergency situation display unit 130 from a point where the ambulance vehicle is positioned to a front of a preset distance, such that a driver of a forward vehicle may recognize that the ambulance vehicle is approaching from behind.

This allows a driver to change a lane in advance with ease not to hinder the traveling of the emergency vehicle, such that an ambulance may quickly arrive at an accident spot.

At this time, the control for turning-on or blinking the emergency situation display unit 130 of the display device 100 from the point of the ambulance vehicle to the front of the preset distance may also be performed under the control of the control center server 12.

On the other hand, the first emergency situation notification device for an emergency vehicle which may be allocated to emergency vehicles, for example, a police car, an ambulance, a fire truck, and a road management car and the like is provided with a plurality of buttons according to a type of accidents.

Accordingly, the user of the corresponding vehicle presses different types of emergency buttons depending on the situation as the emergency vehicle travels on a road. The emergency situation display unit 130 of the display device 100 may be operated to be turned-on or blinked in different colors whenever the user presses each emergency button. (Of course, to this end, the emergency situation display unit 130 may include a plurality of LED elements for emitting a plurality of colors (for example, red and blue) in advance).

For example, an accident notification button is pressed in order to notify an accident occurring ahead. At this time, a red light is blinked. A driver who recognizes the blinking of the red light slows down a vehicle speed. In addition, if safe driving is required because there is a section under construction in the front, there are rocks on a road, or a road surface is slippery, the caution notification button is pressed. At this time, an amber light is blinked. A driver who recognizes the blinking of the ambler light slows down a vehicle speed.

In addition, when it is notified that the emergency vehicle is traveling on a road, the emergency vehicle traveling notification button is pressed. At this time, a green light is blinked. A driver who recognizes the blinking of the green light changes a lane, so that the emergency vehicle may travel smoothly.

Finally, if a driver needs to be evacuated to a safe area to avoid a disaster or an air raid of an enemy, an emergency evacuation notification button is pressed. In this case, red and blue lights are alternately blinked. Divers or nearby people who are aware of the alternative blinking of the red and blue lights should be evacuated to a safe area.

At this time, depending on a signal type, the blinking speed of the emergency situation display unit may be different.

These are arranged in the following Table 1.

**[Table 1]**

| Emergency button unit | Signal type | Signal color | Blink Time | Action guideline |
|---|---|---|---|---|
| Accident notification button | Accident alert signal | Red | Medium | Slow driving |
| Caution notification button | Caution notification | Amber | Long | Slow driving |
| Emergency evacuation notification button | Emergency evacuation alert signal | Alternate Red/Blue | Short | Evacuation to safe area |
| Emergency vehicle traveling notification button | Emergency vehicle traveling alert signal | Green | Short | Lane yield |

### [Configuration of Second Embodiment]

### [Pre Alert Signal-Use of Smart phone]

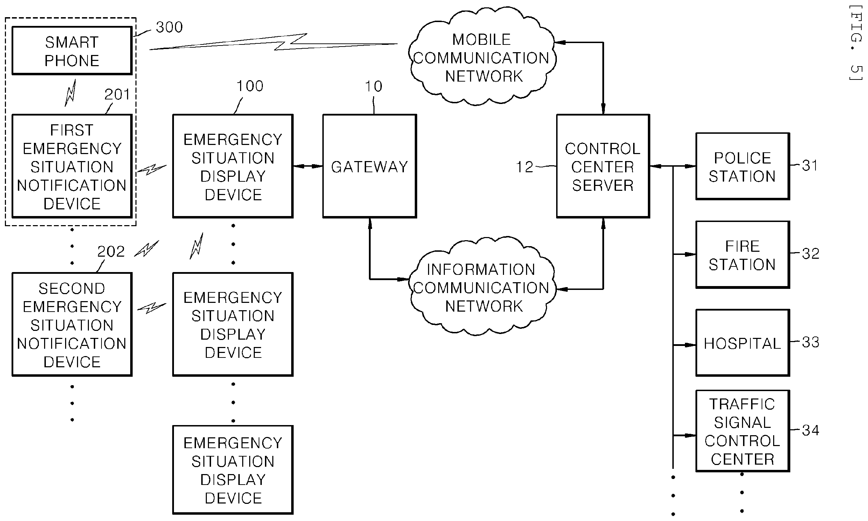

FIG. 5 is a configuration diagram of an emergency situation handling platform for a road using an emergency situation display device attached to a street light according to a second embodiment of the present disclosure. The platform according to the second embodiment illustrated in FIG. 5 is substantially the same as the configuration according to the first embodiment illustrated in FIG. 1, but additionally, has a configuration so that the emergency situation notification devices 201 and 202 interlock with a mobile communication terminal 300 such as nearby smart phones to perform the emergency situation notification operation. That is, the emergency situation notification devices 201 and 202 may additionally have a function and a structure of not only transmitting the emergency situation occurrence information to the emergency situation display device 100, but also transmitting the emergency situation occurrence information to the mobile communication terminal 300. The mobile communication terminal 300 may transmit the corresponding information to the control center server 12 through the mobile communication network and the control center server 12 may confirm the occurrence of the emergency situation through such information. At this time, the communication module of the control center server 12 may additionally include the infrastructure communicating with the mobile communication network.

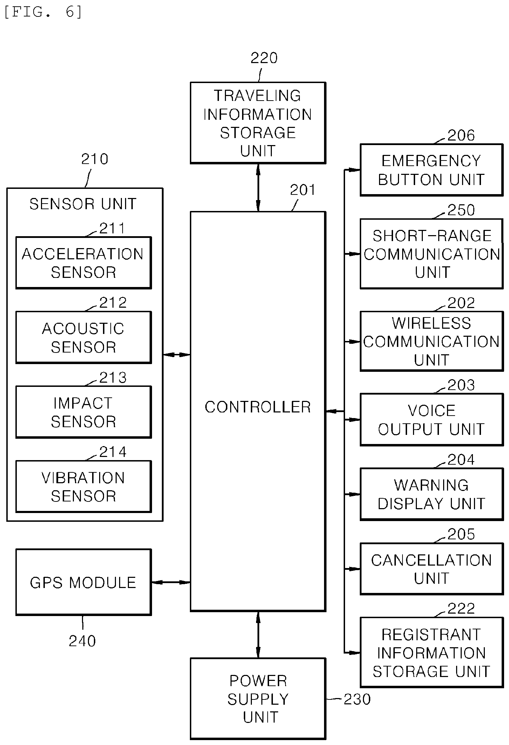

FIG. 6 is a block configuration diagram of, for example, the first emergency situation notification device 201 in FIG. 5. As illustrated in FIG. 6, the first notification device 201 further includes a short-range communication unit 250 performing short-range communication such as Bluetooth or near field communication (NFC), including the detailed components of the embodiment in FIG. 2. The short-range communication unit 250 communicates with the wireless communication terminal (hereinafter, referred to as a 'smart phone'). Of course, the second emergency situation notification device 202 may also further include the short-range communication unit 250.

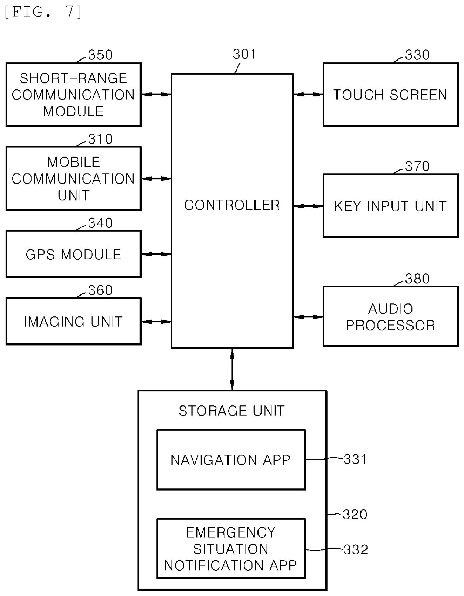

FIG. 7 is a block configuration diagram of a mobile communication terminal (smart phone) in FIG. 5. Referring to FIG. 7, the smart phone 300 includes a controller 301, a touch screen 330, a key input unit 370, an audio processor 380, a mobile communication unit 310, a GPS module 340, an imaging unit 360, a storage unit 320, and a short-range communication module 350.

The touch screen 330 may include a display panel (not illustrated) which performs a display function of displaying output information output from the corresponding smart phone and an input sensing panel (not illustrated) for performing various input functions by a user. The key input unit 370 is provided with keys for a plurality of operations mechanically provided on an outer housing of the corresponding smart phone and receives a user's operation. The audio processor 380 includes a speaker for outputting audio signals of the corresponding smart phone, a microphone for collecting audio signals, and the like. The audio processor 380 processes the input / output audio signals.

The mobile communication unit 310 performs a wireless signal processing operation for mobile communication such as a mobile communication base station, and may be configured to include an antenna, an RF unit, and a modem. The GPS module 340 may calculate the current position and traveling information of the smart phone. The imaging unit 360 photographs subjects such as a still image and a moving image. The short-range communication module 350 performs short-range communication such as a wireless LAN module, Wi-Fi direct, near field communication (NFC), and Bluetooth to be connected to a wireless Internet at a place where a radio access point (AP) is installed or wirelessly perform a short-range communication operation with surrounding devices.

The storage unit 320 may store a signal or data of a touch screen 330, a key input unit 370, an audio processor 380, a mobile communication unit 310, a GPS module 340, an imaging unit 360, and a short-range communication module 350 according to the control of the controller 301. In addition, the storage unit 320 may store a control program and applications (apps) for controlling the smart phone or the controller 310. The controller 301 collectively controls each functional unit to control the overall operation of the corresponding smart phone.

The configuration and operation of each functional units in the smart phone 300 may be substantially the same or similar to the internal configuration and operation such as a typical smart phone. However, the short-range communication module 350 performs, for example, a function of communicating with the short-range communication module of the emergency situation notification devices 201 and 202 which may be provided in the vehicle.

In addition, the storage unit 320 of the corresponding smart phone may previously store an emergency situation notification application (application) 332 for performing an operation corresponding to an emergency situation alert signal according to some embodiments of the present disclosure. The emergency situation notification application 332 may be downloaded and stored in advance from an application providing server (not illustrated) through a mobile communication network, and may be executed according to an application execution operation by the user of the corresponding smart phone. In addition, a navigation application (application) 331 for performing a navigation function may be previously stored in the storage unit 320, and a navigation function may be performed according to a user's execution operation.

The controller 301 of the smart phone 300 may display an execution related screen through the touch screen 330 or receive an execution operation from the user according to the execution of the emergency situation notification application, and receive information provided from the emergency situation notification devices 201 and 202 through the short-range communication module 350 and transmit the information to the control center server 12 through the mobile communication network. At this time, the controller 301 may transmit the position information and the traveling information of the user which are confirmed through the GPS module 340.

When the position information and the traveling information of the vehicle are transmitted using the GPS module 340 in the smart phone 300, it is not necessary to separately provide the GPS module 240 in the emergency situation notification devices 201 and 202. In this case, it is possible to manufacture the emergency situation notification device at a lower cost.

Describing the above configuration and operation, it is possible to know that the control center server 12 receives the information provided from the emergency situation notification devices 201 and 202 through two different network routes, that is, a route using a gateway and an information communication network and a route using a mobile communication network. In such a configuration, it may be configured not to carry out the information transfer procedure from the route using the gateway and the information communication network to the control center server 12. However, in consideration of a communication error situation or the like in any one route, both of the two network routes maybe used for more accurate information transmission.

### [First Modification of Second Embodiment]

### [Pre Alert signal - Interlocking of Smart Phone with Navigation]

Meanwhile, if the smart phone 300 can perform the navigation function, the smart phone 300 may interlock with the navigation to perform the emergency situation notification operation. That is, as illustrated in FIG. 7, the storage unit 320 of the smart phone 300 may previously store the navigation application 331 for performing the navigation function to perform the navigation function according to the execution operation of the user.

The navigation is a device that integrates a GPS and a geographic information system to be used to drive a vehicle, and is a device that displays a current position of a vehicle on a map using latitude / longitude information obtained from the GPS.

Therefore, if the navigation system is used, various kinds of information necessary for traveling such as a current position of a vehicle, a traveling direction of a vehicle, a destination to be traveled, a distance to the destination, a current traveling speed of the vehicle, a route set before the user travels his / her vehicle, and an optimal route to a destination may be provided.

A first modification of the second embodiment using the navigation function will now be described.

The driver of the emergency vehicle operates the smart phone 300 before the start to execute the emergency situation alert application. Thereafter, the navigation is executed to select a destination to which the user intends to go, and the emergency vehicle traveling notification button of the first emergency situation notification device 201 is selected, and then the emergency vehicle starts.

Accordingly, the controller 201 of the first emergency situation notification device 201 transmits the emergency vehicle traveling alert signal through the wireless communication unit 202 and the short-range communication unit 250.

The controller of the nearby emergency situation display device 100 receiving the emergency vehicle traveling alert signal transmits the received emergency vehicle traveling alert signal to the control center server 12 through the gateway 10, and turns-on or blinks the emergency situation display unit corresponding to the emergency vehicle traveling alert signal as preset.

In addition, the emergency vehicle traveling alert signal is transmitted to the emergency situation display device positioned at the front side in the traveling direction of the emergency vehicle, so that the emergency situation display unit of the front-side display device is turned-on or blinked correspondingly.

In addition, the controller 301 of the smart phone 300 receiving the emergency vehicle traveling alert signal transmits various kinds of information required for traveling confirmed through the navigation to the control center server 12 together with the emergency vehicle traveling alert signal. At this time, only the route coordinate information as the route information of the emergency vehicle may be transmitted, and the control center server 12 may confirm the traveling route of the corresponding emergency vehicle by applying the route coordinate information to the map previously provided. Thereafter, the control center server 12 may control the emergency situation display device on the traveling route of the emergency vehicle to perform an appropriate warning operation.

As described above, since the current position and the traveling route of the emergency vehicle may be known accurately based on the navigation information, the control center server 12 may interlock with a traffic signal control center 34 to control a traffic signal controller, thereby more effectively performing the control. For example, if the traveling route of the emergency vehicle goes straight at the intersection, when the emergency vehicle enters the vicinity of the intersection, the traffic signal controller maybe controlled to set the color of the traffic light to be blue in advance, such that the vehicle becomes a 'traveling' state in the direction corresponding to the traveling direction of the emergency vehicle. Of course, in the case of a route that indicates a left turn at an intersection, the traffic signal controller may be controlled in advance so that the state of the traffic light becomes a left turn when the emergency vehicle enters the vicinity of the intersection. In this way, the emergency vehicle can arrive at the accident spot more quickly. Further, if there is a congestion section on the route to the destination set before traveling, another route along which a vehicle can travel faster maybe provided through the smart phone .

Although it is described that the smart phone performs the navigation function, in the emergency vehicle, the navigation device may be separately provided in the vehicle, and the driver of the corresponding vehicle may use the separate navigation device. In this case, when the separate navigation is used, the smart phone communicates with the corresponding navigation device by the short-range communication connection method to perform an operation of receiving the route coordinates of the traveling route and perform the operation of providing the received route coordinates to the control center server.

### [Second Modification of Second Embodiment]

### [Pre Alert Signal of Smart phone itself]

In the meantime, in the above description of the embodiments of the present disclosure, the separate emergency situation notification devices 201 and 202 are provided to perform the related operations. However, in some embodiments of the present disclosure, the main function of the emergency situation notification device, that is, the emergency situation notification function may be configured to be performed in the smart phone 300. In this case, the emergency situation notification devices 201 and 202 may not be provided in the vehicle or the like.

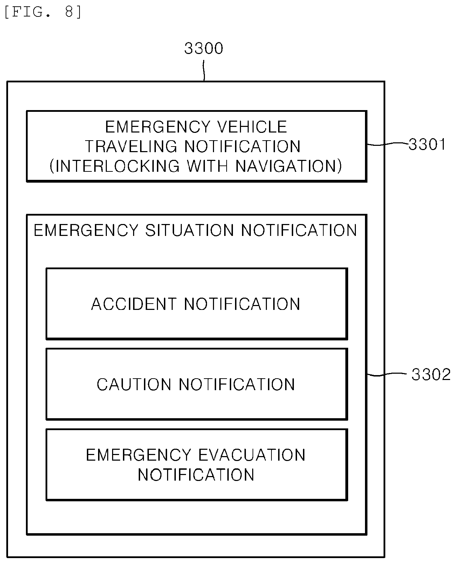

FIG. 8 is a diagram illustrating an example of an operation screen of the smart phone 300 illustrated in FIG. 7, and may be an initial screen of an execution screen of the emergency situation notification application of the smart phone 300, for example. As illustrated in FIG. 8, an initial execution screen 3300 of the emergency situation application may include a first input item 3301 for operating the emergency vehicle traveling notification function and a second input item 3302 for operating the emergency situation notification function, and may receive the operations such as the touch input for the items from the user to perform the function correspondingly.

That is, the information related to the input item is transmitted to the control center server 12 through the mobile communication network. At this time, the second input item 3302 for operating the emergency situation notification function may be configured to include detailed items for the emergency situation such as 'accident notification', 'caution notification' and 'emergency evacuation notification' to transmit the classified information for each detailed items.

In this way, the emergency situation notification application can be implemented in advance to perform both the emergency vehicle traveling notification and the emergency situation notification function, for example and accordingly, the smart phone may perform both the emergency vehicle traveling notification and the emergency situation notification operation. Of course, it can be configured to perform only any one of these functions depending on the application implementation.

Also, in this case, the controller 301 of the smart phone 300 may include a function of detecting an accident through the sensor unit (not illustrated) which may be provided in the smart phone itself, and may store the registrant information in advance. In addition, the emergency situation notification device may be configured to perform only accident detection and a signal transmission function corresponding thereto, and the smart phone 300 may be configured to use the short-range wireless communication to receive the accident detection signal from the emergency situation notification device.

Meanwhile, in the above description, the emergency traveling notification function is applied only to a previously applied emergency vehicle or the smart phone of the user, so that only a previously authorized user can use the emergency traveling notification function. However, the emergency traveling notification function may also be provided as a normal function so that it can be used by the general public other than the previously authorized user. That is, the general public can perform such an emergency traveling notification function, for example, in the case of emergency patient transportation, and accordingly, the control center server confirms the position of the general public's vehicle (that is, the general public's mobile communication terminal), which maybe set to be a so-called 'temporary emergency vehicle', and control the emergency situation display device of the traveling route of the temporary emergency vehicle to perform an appropriate warning operation.

### [Third Embodiment]

### [Mobile Communication Modem Equipped in Emergency Situation Display Device]

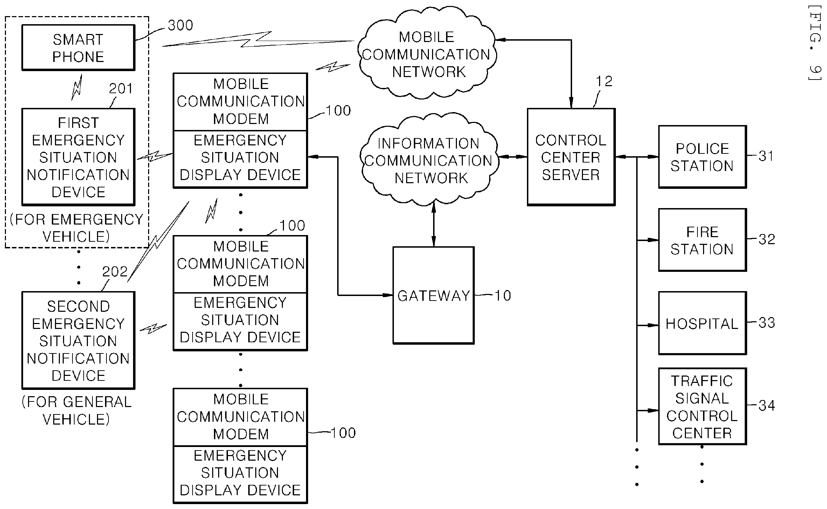

FIG. 9 is a configuration diagram of an emergency situation handling platform for a road using an emergency situation display device attached to a street light according to a third embodiment of the present disclosure. A platform according to the third embodiment illustrated in FIG. 9 is substantially the same as the configuration according to the second embodiment illustrated in FIG. 5, but the emergency situation display device 100 is additionally configured to perform an emergency situation notification operation even through a mobile communication network. That is, in the third embodiment of the present disclosure, the mobile communication modem may be equipped in the emergency situation display device 100 so as to communicate with the control center server 12 even through the mobile communication network.

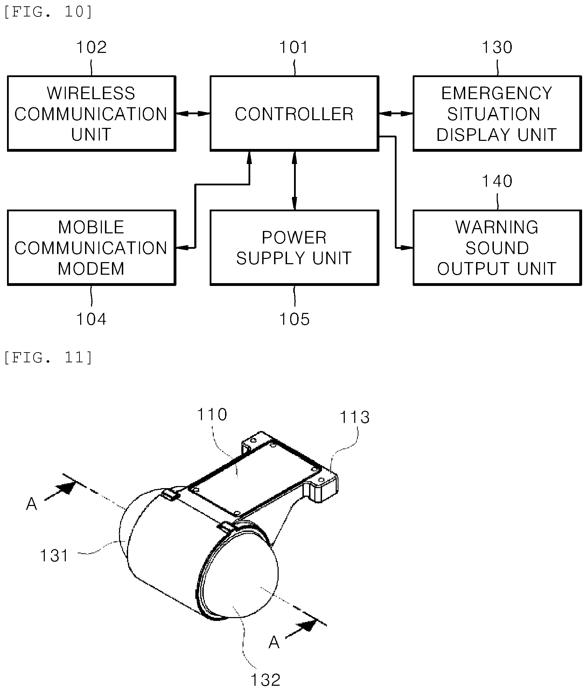

FIG. 10 is a block configuration diagram of an example of the emergency situation display device 100 in FIG. 9. The emergency situation display device illustrated in FIG. 10 has most of the components as illustrated in FIG. 4, and may further include a mobile communication modem 104 which communicates with the control center server 12 through the mobile communication network.

That is, in the example illustrated in FIG. 10, the emergency situation display device 100 includes a mobile communication modem 104 which communicates with the control center server 12 through the mobile communication network in addition to the wireless communication unit 102 for performing a communication function with the control center server 120 through the gateway and the information communication network as illustrated in FIGS. 1 to 8, such that it can communicate with the control center server 12 through two different network routes.

However, in actual implementation of the product, the emergency situation display device 100 may not include the wireless communication unit 102, but may include only the mobile communication modem 104 which performs communication through the mobile communication network. In this case, since each emergency situation display device 100 may utilize the existing mobile communication network for connection with the control center server 12, a network can be easily constructed.

In addition, when each of the emergency situation display device 100 includes the mobile communication modem 104 and communicates with the control center server 12 through the mobile communication network as described above, the control center server 12 easily controls separately the operation of the respective emergency situation display device 100, thereby more variously controlling the warning operation of the respective emergency situation display device 100.

### [Using CCTV]

In recent years, CCTV cameras are installed at regular intervals on the road to collect traffic information and receive and utilize image information of the corresponding area. Accordingly, if the emergency vehicle receives and utilizes the image information, the vehicle can be more effectively traveled. For example, when the image information photographed by the CCTV camera is received through the smart phone, the driver of the emergency vehicle can be driven while visually confirming the front traffic situation over a certain distance corresponding to the traveling direction, and thus performs an operation such as modifying the traveling direction depending on the situation, such that the emergency vehicle may arrive at the destination more quickly.

### [Using self-driving vehicle]

In recent years, a technology development for a self-driving vehicle has been made. For the self-driving, the self-driving vehicle utilizes sensing values of various sensors to determine the nearby traffic conditions and is driven. Accordingly, if the emergency situation notification device is installed in the self-driving vehicle, the control center sever can recognize an occurrence of an accident when the accident occurs as described in the above embodiments. However, if the emergency situation display device is in operation while the vehicle is driven using the self-driving vehicle, vehicle passengers detect the situation where the emergency situation display device is operated and should take measures accordingly. However, to cope with the situation where the vehicle passengers do not recognize that the emergency situation display device is operated, a program which detects the operation of the emergency situation display device and take measures corresponding thereto maybe embedded in the self-driving vehicle in advance.

### [Detailed Configuration of Emergency Situation Display Device]

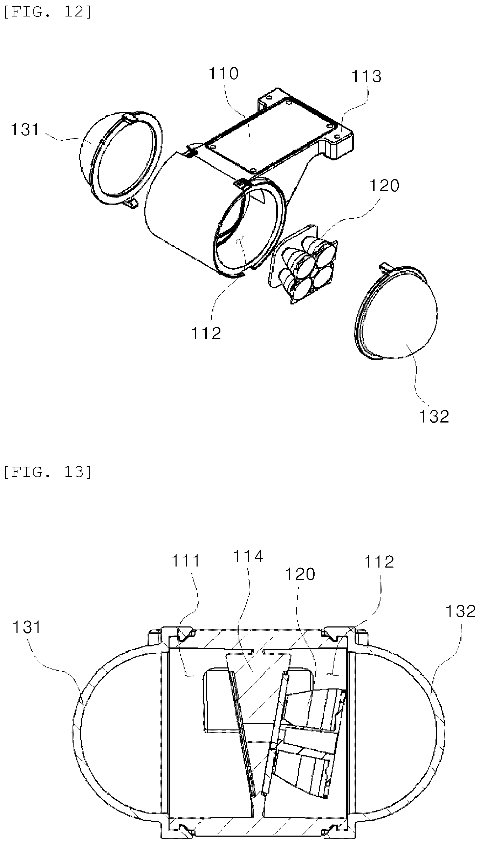

FIG. 11 is a perspective view of a first example of an emergency situation display device applicable to an emergency situation handling platform for a road of the present disclosure, FIG. 12 is an exploded perspective view of FIG. 11, and FIG. 13 is a partial cross-sectional view taken along line A-A' of FIG. 11. Referring to FIGS. 11 to 13, the emergency situation display device according to the present disclosure includes: two receiving portions 111 and 112 having light outlets on left and right sides with respect to a partition wall 114; a body 110 including a coupling portion 113 which extends in one direction between the receiving portions 111 and 112 to be coupled to a street light; an emergency situation optical module 120 which is inserted into the receiving portion 112 opposite to the traveling direction in the installed state among the receiving portions 111 and 112 of the body 110; and covers 131 and 132 which cover each of the light outlets of the receiving portions 111 and 112.

Such a configuration may further include the receiving portion 111 in consideration of a country in which the traveling direction of the vehicle is different from that of Korea like Japan or the United Kingdom, so that the optical module 120 may be equipped in the receiving portion 111 when a self-driving vehicle is exported to the corresponding country.

The emergency situation display device 100 has excellent visibility since the light outlet is toward the opposite side in the traveling direction, that is, the succeeding vehicle. The configuration of such an emergency situation display device 100 is just an example and may be modified into various types of indicating lamps.

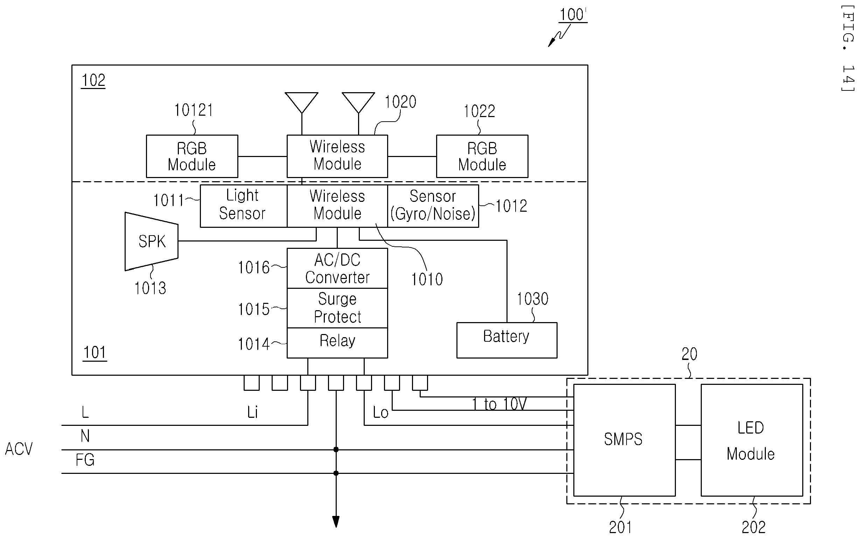

FIG. 14 is a block configuration diagram of a second example of the emergency situation display device applicable to the emergency situation handling platform for a road of the present disclosure. An emergency situation display device 100' illustrated in FIG. 14 according to some embodiments of the present disclosure includes: an indicating lamp part 102 responsible for an emergency light function; and a keying part 101 responsible for a communication function with the control center server illustrated in FIG. 1 and a power supply function. At this time, the keying part 101 may communicate with a control center server 500 to additionally perform a street light control function. Therefore, the emergency situation display device may perform the street light control function as well as the emergency situation notification function using the indicating lamp.

The indicating lamp part 102 may be configured to include a wireless communication unit 1020 which wirelessly communicates with the emergency situation notification device equipped in a vehicle or the like and emergency lights 1021 and 1022 which may emit light of a plurality of colors (for example, RGB). In the example of FIG. 13, the emergency lights 1021 and 1022 are provided at two places.

When the emergency lights 1021 and 1022 are configured to emit light of a plurality of colors, the emergency situation display device may be operated to turn-on or blink the emergency situation indicating lamp by different colors (or alternately changed colors or mixed colors) to correspond to different types of emergency situation alert signals received from the emergency situation notification device.

The keying part 101 is configured to include: a wireless communication unit 1010 which is responsible for a communication function with the control center server 500; an light sensor 1011 which detects light; an emergency situation detection sensor 1012 which detects vibrations, sounds and the like for discriminating various emergency situations; a speaker 1013 which outputs a waning sound or the like at the time of an emergency situation; a power supply unit 1014 which is supplied with external commercial power, for example, an alternating current value (ACV) to generate internal operating power and provide it to an internal route and has a relay or the like for providing the external commercial power to the street light 20; an surge protector 1015 which prevents a surge introduced from the power supply unit 1014 from being introduced into a power supply route; a converter 1016 which converts the power introduced from the power supply unit 1014 through the surge protector 1015 into operating power for each internal function units; an auxiliary power supply unit 1030 which is configured of, for example, a large-capacity charging battery or the like to provide operating power separately from the street light even when the supply of power to the corresponding street light is cut off; and a controller 1019 which collectively controls the overall operation of the corresponding emergency situation display device. At this time, the operating power converted from the converter 1016 may be provided to the controller 1019.

In the above configuration, the wireless communication unit 1020 of the indicating lamp part 102 and the wireless communication unit 1010 of the keying part 101 may be configured to perform the wireless communication using the same communication scheme such as Zigbee. At this time, communication channels are set differently so that the street light control operation and the indicating lamp control operation do not interfere with each other.

In some cases, the wireless communication unit 1020 of the indicating lamp part 102 applies a communication scheme such as Bluetooth or a wireless LAN and Wi-Fi, such that the wireless communication unit 1010 of the keying part 101 transmits wireless may be configured to perform wireless communication by different communication schemes.

Meanwhile, the emergency situation display device according to the present disclosure may have a configuration according to a standard specification applied to a general street light control device. For example, the National Electrical Manufacturers Association (NEMA) defines a 7-pin receptacle to which the street light control device can be connected as the standard specification. Similarly, the keying part 101 may have a structure connected to the 7-pin receptacle configuration.

That is, in the standard specification of the 7-pin receptacle, 3 pins for power supply, 2 pins for dimming control, and extra 2 pins for providing functions are defined, and the keying part 101 has a structure connected to the 7-pin standard. According to this configuration, the emergency situation display device according to some embodiments of the present disclosure may be installed in a compatible manner with a portion where the existing street light control device is installed.

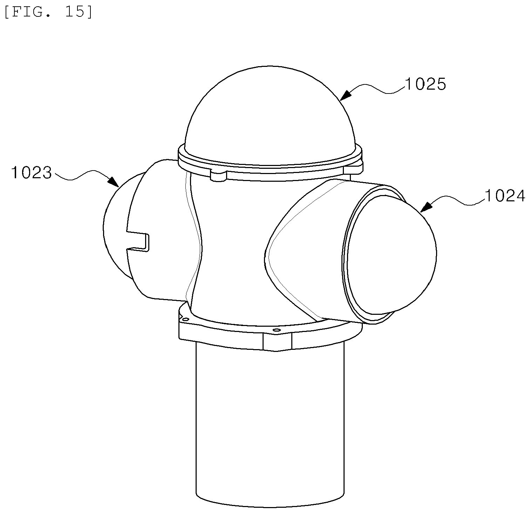

FIG. 15 is a perspective view of the emergency situation display device 100' illustrated in FIG. 14. As illustrated in FIG. 15, the emergency situation display device 100' is provided with first and second receiving portions 1023 and 1024 which protrude on left and right sides of a body, respectively, and have outside formed of a transparent or translucent cover, and thus may each have the emergency situation optical modules 1021 and 1022 mounted therein.

A third receiving portion 1025 in which each of the antennas for transmitting and receiving radio signals of the wireless communication unit 1020 of the indicating lamp part 102 and the wireless communication unit 1010 of the keying part 101 may be mounted, may be protrudedly provided on the upper side of the body of the emergency situation display device 100' .

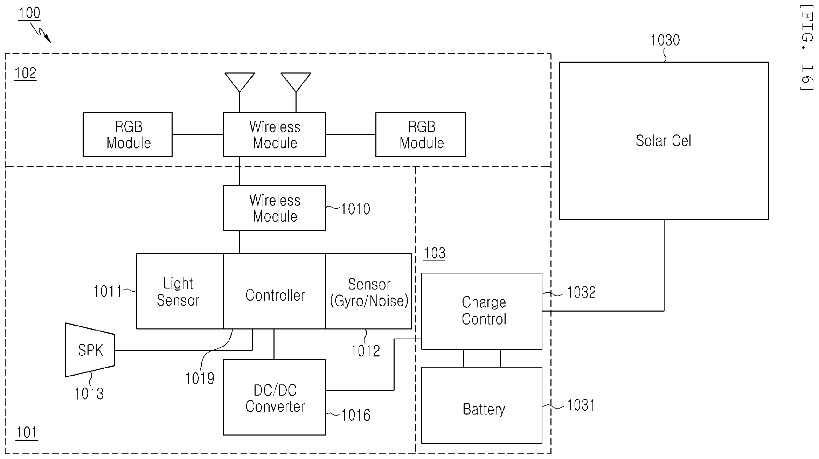

FIG. 16 is a block configuration diagram of a third example of the emergency situation notification device applicable to the emergency situation handling platform for a road of the present disclosure. An emergency situation display device 100" illustrated in FIG. 16 has the indicating lamp part 102 responsible for the indicating lamp function which is partially similar to the configuration of the embodiment illustrated in FIG. 15 and the keying part 101 responsible for the communication function with the control center server 500 and the power supply function and further includes a charging power supply unit 103 which is integrally installed or is supplied with power from a solar cell 1030 separately installed on the outside to supply operating power for the corresponding emergency situation display device 100".

The emergency situation display device 100" illustrated in FIG. 16 is operated by a private generation structure, not the external commercial power. For example, the emergency situation display device 100" has a structure which is suitable to be installed on other separate columns or the like, on a road on which a street light is not installed. That is, the structure may cope with the emergency situation on the road on which the street light is not installed.

Similar to the structure illustrated in FIG. 14, the indicating lamp part 102 in the emergency situation display device 100" illustrated in FIG. 16 may include: the wireless communication unit 1020 which performs wireless communication with the emergency situation notification device mounted in the vehicle or the like; and the emergency lights 1021 and 1022 which may emit light of a plurality of colors (for example, RGB).

The keying part 101 of the emergency situation display device 100" illustrated in FIG. 15 is configured to include: the wireless communication unit 1010 which is responsible for the communication function with the control center server; the light sensor 1011 which detects light; the emergency situation detection sensor 1012 which detects vibration, sound, or the like for discriminating various emergency situations; a speaker 1013 which outputs the warning sound or the like at the time of the emergency situation; the converter 1016 which converts the power provided from the charging power supply unit 103 into operating power for each function units therein, and the controller 1019 which collectively controls the overall operation of the corresponding emergency situation display device.

At this time, the charging power supply unit 103 comprises the rechargeable battery 1031 and charge control 1032 which charges the power supplied from the solar battery 1030 in the rechargeable battery 1031 and provides the power of the rechargeable battery 1031 to the converter 1016 of the keying part 101.

As described above, the configuration and operation of the emergency situation display device and the emergency situation notification device are described in various embodiments of the present disclosure. However, at least some configurations of the detailed configurations according to the respective embodiments may be similarly applied to other embodiments. For example, the first emergency situation notification device installed in the emergency vehicle does not have the sensor unit for detecting an accident or the like, and may be configured not to perform an operation related to detection of an accident. Various modifications and alterations may be possible

Meanwhile, it will be appreciated that the embodiments of the present disclosure described above may be implemented in hardware, software, or a combination of hardware and software. Any software may be stored in non-volatile storage devices such as a ROM, memories such as a RAM, a memory chip, a device, and an integrated circuit, or a storage medium which may be read with a machine (for example, computer) simultaneously with being optically or magnetically recorded such as a CD, a DVD, a magnetic disk, and a magnetic tape, regardless of whether it may be deleted or rewritten.

The memory which may be included in a mobile terminal may be one example of a storage medium which may be read with programs including instructions implementing the exemplary embodiments of the present disclosure or a machine appropriate to store the programs.

Accordingly, the present disclosure include a program including codes for implementing the apparatus or the method recited in any of claims herein, and a storage medium which can be read with a machine for storing the program. In addition, such a program may be electronically transmitted through any medium, such as a communication signal transmitted over a wired or wireless connection, and the present disclosure suitably includes equivalents thereof.

## Claims

1. An emergency situation handling platform for a road, comprising:
an emergency situation notification device which is a user side device and generates a wireless signal notifying an occurrence of an emergency situation when the emergency situation occurs;
an emergency situation display device which is an infrastructure installed on a roadside and receives a wireless signal of the emergency situation notification device and transmits the received wireless signal to a control center server, and performs a turning-on or blinking operation notifying the emergency situation; and
a control center server which controls the emergency situation display device.

2. The emergency situation handling platform of claim 1, wherein the emergency situation notification device is divided into a first emergency situation notification device and a second emergency situation notification device, and the first emergency situation notification device is provided with an emergency button for receiving an operation of the emergency situation from a user relative to the second emergency situation notification device and transmits an emergency situation alert signal if the emergency button is input.

3. The emergency situation handling platform of claim 2, wherein the emergency button includes a plurality of buttons according to a preset type of emergency situations, and the emergency situation alert signal includes information corresponding to the input button among the plurality of buttons .

4. The emergency situation handling platform of claim 2, wherein the emergency situation display device performs the corresponding turning-on or blinking operation according to the type of emergency situations.

5. The emergency situation handling platform of claim 2, wherein the control center server controls the emergency situation display device to correspond to the type of emergency situations if the emergency situation alert signal is received and shares information with other institution centers.

6. An emergency situation notification device for generating a wireless signal notifying an occurrence of an emergency situation when the emergency situation occurs, comprising:
a sensor unit which detects an accident;
a global positioning system (GPS) module which notifies a position of a vehicle and traveling information of the vehicle;
a traveling information storage unit which stores information of the sensor unit and the GPS module;
a wireless communication unit which communicates with an external emergency situation display device according to a control signal;
a voice output unit which notifies contents corresponding to an emergency situation alert signal received from the outside by a voice;
a warning display unit which displays contents corresponding to the emergency situation alert signal;
a cancellation unit which includes a cancellation button for receiving an operation of canceling an output of the voice output unit and the warning display unit from a user;
a controller which receives a detection value from the sensor unit to transmit the emergency situation alert signal corresponding to an occurrence of an accident if the occurrence of the accident is detected and information of the traveling information storage unit to the outside through the wireless communication unit or controls the emergency situation alert signal received from the outside through the wireless communication unit to be notified through the voice output unit and the warning display unit; and
a power supply unit which supplies power to each unit.

7. The emergency situation notification device of claim 6, further comprising:
a registrant information storage unit which stores information of a registrant of the corresponding emergency situation notification device,
wherein the controller additionally transmits the information of the registrant information storage unit together with the emergency situation alert signal and the information of the traveling information storage unit if the occurrence of the accident is detected.

8. The emergency situation notification device of claim 6 or 7, further comprising:
an emergency button for receiving an operation of an emergency situation from a user,
wherein the emergency button includes a plurality of buttons according to a preset type of emergency situations, and the emergency situation alert signal includes information corresponding to an input button among the plurality of buttons .

9. An emergency situation display device receiving a wireless signal notifying an occurrence of an emergency situation from an emergency situation notification device and transmitting the received wireless signal to a control center server and performs a turning-on or blinking operation notifying the emergency situation, comprising:
a wireless communication unit which communicates with the emergency situation notification device and other emergency situation display devices;
an emergency situation display unit which performs a display operation corresponding to the emergency situation;
a controller which controls information transmitted from the emergency situation notification device through the wireless communication unit to be transmitted to the control center server and the emergency situation display unit to be turned-on or blinked; and
a power supply unit which supplies power to each unit.

10. The emergency situation display device of claim 9, further comprising: a warning sound output unit which notifies contents corresponding to the emergency situation by a warning sound.

11. The emergency situation display device of claim 9, wherein the controller confirms a type of emergency situations from the information transmitted from the emergency situation notification device through the wireless communication unit and controls the emergency situation display unit to perform the corresponding turning-on or blinking operation according to the type of emergency situations.

12. The emergency situation display device of claim 9, wherein the emergency situation display device is installed on a street light or a pole of the street light, and the power supply unit is configured to receive power supplied from the street light and further includes an auxiliary power supply unit including a charging battery.

13. The emergency situation display device of claim 9, wherein the power supply unit includes a charging power supply unit which is supplied with power from a solar cell to generate operating power.

14. The emergency situation handling platform of claim 1, wherein the emergency situation notification device has a configuration which interlocks with a mobile communication terminal to additionally provide information notifying an occurrence of an emergency situation when the emergency situation occurs to the mobile communication terminal to allow the mobile communication terminal to transmit the information received from the emergency situation notification device to the control center server through a mobile communication network, and the control center server has a configuration which is connected to the mobile communication network to receive the information of the emergency situation notification device from the mobile communication terminal through the mobile communication network.

15. The emergency situation handling platform of claim 1, wherein the emergency situation display device includes a mobile communication modem to receive a wireless signal of the emergency situation notification device and transmit the received wireless signal to the control center server through the mobile communication network, and the control center server is connected to the mobile communication network to have a configuration which receives the information of the emergency situation notification device transmitted from the emergency situation display device through the mobile communication network.
